(19) Europäisches Patentamt
European Patent Office
Office européen des brevets

(11) Publication number: **0 175 447 A1**

# (12) EUROPEAN PATENT APPLICATION

(21) Application number: 85304715.7

(22) Date of filing: 02.07.85

(51) Int. Cl.[4]: C 08 L 75/04, C 08 G 18/66, C 08 K 7/14, C 08 K 9/04, C 08 J 5/08

(30) Priority: 30.08.84 US 645600

(43) Date of publication of application: 26.03.86 Bulletin 86/13

(84) Designated Contracting States: BE DE FR GB IT NL SE

(71) Applicant: TEXACO DEVELOPMENT CORPORATION, 2000 Westchester Avenue, White Plains New York 10650 (US)

(72) Inventor: Dominquez, Richard Joseph Gilbert, 3107 Canter Lane, Austin Texas 78759 (US)

(74) Representative: Burnside, Michael et al, Michael Burnside & Partners 2 Serjeants' Inn Fleet Street, London EC4Y 1HL (GB)

## (54) Reaction injection molded elastomers.

(57) The tensile strength of RIM elastomers obtained from aromatic polyisocyanates, polyether polyols, chain extenders and fillers (e.g. glass-based fillers) can be enhanced by incorporating an epoxysilane coupling agent, e.g.

$$R'\text{-}SiX_3$$

wherein R' is an epoxidic group and X is a hydrolyzable group.

EP 0 175 447 A1

REACTION INJECTION MOLDED ELASTOMERS

This invention concerns the field of reaction injection molded elastomers.

US-A-4 254 069 and 4 272 618 concern the curing of RIM polyurethane elastomers. In these patents, a "polyol" is defined as a high molecular weight alcohol having a functionality of 2 or more, or an amine terminated molecule composed of ether groups. These patents disclose amines, including aromatic diamines, as chain extenders, but the actual examples are of polyether polyurethanes using polyols (hydroxyl terminated) of high molecular weight. The chain extender, monoethanolamine, was used as a crosslinker.

US-A-3 838 076 and 3 847 992 disclose foams made from amine terminated polyethers, wherein the extent of amine termination ranges from 10 to 50% and 15 to 55% respectively.

US-A-3 523 918 describes the use of amine chain extenders for the preparation of integral-skin foams. US-A-4 218 543 describes the use of high molecular weight polyols, certain aromatic diamines and isocyanates for the production of RIM parts, 1-methyl-3,5-diethyl-2,4-diaminobenzene (diethyltoluene diamine) and its isomers being specifically mentioned as a chain extender.

US-A-4 246 363 describes a RIM polyurethane composition obtained by using at least three different polyols (including amine terminated polyethers) having specific reactivity and solubility parameters and relationships to one another. US-A-4 269 945 describes a process for preparing RIM polyurethanes using a relatively high molecular weight hydroxyl containing polyol, a chain extender and a polyisocyanate. The chain extender may be an aliphatic amine containing material having at least one primary amine group.

US-A-4 396 729; 4 444 910 and 4 433 067 relate to elastomers prepared using a high molecular weight amine

terminated polyether, an aromatic diamine chain extender, and a polyisocyanate, which may be merely a polyisocyanate or a quasi-prepolymer prepared from a polyol reacted with a polyisocyanate wherein isocyanate groups are still left unreacted.

The paper "Silane Effects and Machine Processing in Reinforced High Modulus RIM Urethane Composites", by E.G. Schwartz, et al., Journal of Elastomers and Plastics, volume 11 (October 1979), page 280, describes the use of silane-treated milled glass fibres in reinforced RIM composites.

The article "Surface Modification for RRIM Urethanes" by Ed Galli, Plastics Compounding, (January/February 1982) discloses silane-treated glass fibre reinforcement of RRIM urethanes. The emphasis is on amino silanes.

The publication "Silane Coupling Agents", by Dow Corning Corporation discusses various silane coupling agents and their applications.

D80259-F EP-A-0 128 636 discloses the use of epoxy modified filler material (e.g. flaked glass, milled glass, mica or Wollastonite) in RIM elastomers made from high molecular weight amine terminated polyethers and/or polyols.

In conventional RIM systems, the so-called A-component contains the isocyanate, whether it is pure isocyanate or a quasi-prepolymer, and a B-component which contains the active hydrogen containing materials, catalysts if needed, and most other additives, including reinforcing materials and fillers such as glass in various forms including, for example, fibres, flaked, or milled.

It has now been found that untreated reinforcing materials and fillers and epoxy silane added to the liquid components of a conventional RIM system display advantages similar to those disclosed for adding pretreated filler materials as in EP-A-0 128 636 referred to above.

The invention relates to a reaction injection molded elastomer made by reacting an aromatic polyisocyanate in a closed mold with a polyether polyol having an equivalent

weight of at least 500, a chain extender and a filler, characterized in that an epoxy silane coupling agent is employed as well as an untreated filler material.

The polyols useful in the process of this invention include polyether polyols, polyester diols, triols, tetrols, etc., having an equivalent weight of at least 500, and preferably from 1,000, more preferably at least 3,000. Those polyether polyols based on trihydric initiators and which have molecular weight of at least 4,000 are especially preferred. The polyethers may be prepared from ethylene oxide, propylene oxide, butylene oxide, or mixtures of propylene oxide, butylene oxide and/or ethylene oxide. In order to achieve the rapid reaction rates which are normally required for molding RIM polyurethane elastomers it is preferable that the polyol be capped with enough ethylene oxide to increase the reaction rate of the polyurethane mixture. Normally at least 50% of primary hydroxyl is preferred, although amounts of primary hydroxyl less than this are acceptable if the reaction rate is rapid enough to be useful in industrial application. Other high molecular weight polyols which may be useful in this invention are polyesters or hydroxyl-terminated rubbers (such as hydroxyl-terminated polybutadiene). Hydroxyl-terminated quasi-prepolymers of polyols and isocyanates are also useful in this invention.

Especially preferred are amine terminated polyethers, including primary and secondary amine terminated polyether polyols, having an average molecular weight of more than 1,500 and a functionality from 2 to 6, preferably 2 or 3, and an amine equivalent weight from 750 to 4,000. Mixtures of amine-terminated polyethers may be used. In a preferred embodiment, the amine-terminated polyethers have an average molecular weight of at least 2,500. These materials may be made by various methods known in the art.

Amine-terminated polyether resins useful in this invention are, for example, polyether resins made from an appropriate initiator to which lower alkylene oxides such as ethylene oxide, propylene oxide, butylene oxide or

mixtures thereof are added, with the resulting hydroxyl terminated polyol then being aminated. When two or more oxides are used, they may be present as random mixtures or as blocks of respective polyethers. In the amination step, it is highly desirable that the terminal hydroxyl groups in the polyol be substantially all secondary hydroxyl groups, for ease of amination. Normally, the amination step does not completely replace all of the hydroxyl groups, but most of the hydroxyl groups are replaced by amine groups. Therefore, the amine terminated polyether resins useful in this invention have more than 50% of their active hydrogens in the form of amine hydrogens. If ethylene oxide is used, it is desirable to cap the hydroxyl-terminated polyol with a small amount of higher alkylene oxide, to ensure that the terminal hydroxyl groups are substantially all secondary hydroxyl groups. The polyols so prepared are then reductively aminated by prior art techniques, for example, as outlined in US-A-3 654 370.

In the practice of this invention, a single high molecular weight amine-terminated polyether resin may be used. Also, mixtures of high molecular weight amine-terminated polyols, such as mixtures of di- and trifunctional materials and/or materials of different molecular weight or different chemical composition may be used. Also, mixtures of polyols and amine terminated polyethers are included within the scope of the invention.

The chain extenders useful in the process of this invention are preferably difunctional. Mixtures of difunctional and trifunctional chain extenders are also useful in this invention. The chain extenders useful in this invention include diols (e.g. ethylene glycol and 1,4-butane diol), amino alcohols, diamines or mixtures thereof.

The aromatic diamine chain extenders useful in this invention include, for example, 1-methyl-3,5-diethyl-2,4 diaminobenzene, 1-methyl-3,5-diethyl-2,6 diaminobenzene (both of these materials are also called diethyltoluene diamine or DETDA), 1,3,5-triethyl-2,6 diaminobenzene,

3,5,3',5'-tetraethyl-4,4"-diaminodiphenylmethane, etc. Particularly preferred aromatic diamine chain extenders are 1-methyl-3,5-diethyl-2,4 diaminobenzene, or a mixture of this compound with 1-methyl-3,5-diethyl-2,6 diaminobenzene. It is within the scope of this invention to include some aliphatic chain extender materials as described in US-A-4 246 363 and 4 269 945.

Other chain extenders which find use in the method of this invention are low molecular weight polyoxyalkylene polyamines which contain terminal amine groups and are represented by the formula

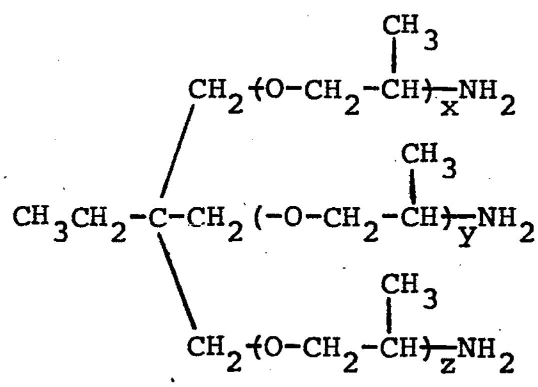

wherein x + y + z is about 5.3. The average amine hydrogen equivalent weight is about 67 and the product is commercially available from Texaco Chemical Company as JEFFAMINE T-403 (JEFFAMINE is a Registered Trade Mark). Another related polyoxypropylene polyamine is represented by the formula

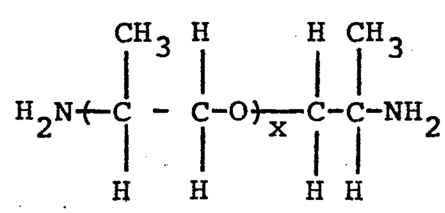

wherein x has a value of about 5.6. This product has an average amine hydrogen equivalent weight of about 100 and is commercially available from Texaco Chemical Company as JEFFAMINE D-400. The product having the same formula as above, but wherein x has an average value of about 2.6, is

also useful. This product has an average amine hydrogen equivalent weight of about 57.5 and is commercially available from Texaco Chemical Company as JEFFAMINE D-230.

Other chain extenders will be apparent to those skilled in the art and the above recitation is not intended to be a limitation on the invention claimed herein.

A wide variety of aromatic polyisocyanates may be used. Typical aromatic polyisocyanates include p-phenylene diisocyanate, polymethylene polyphenylisocyanate, 2,6-toluene diisocyanate, dianisidine diisocyanate, bitolylene diisocyanate, naphthalene-1,4-diisocyanate, bis(4-isocyanatophenyl)methane, bis(3-methyl-3-isocyanatophenyl)methane, bis(3-methyl-4-isocyanatophenyl)methane, and 4,4'-diphenylpropane diisocyanate.

Other aromatic polyisocyanates used in the practice of the invention are methylene-bridged polyphenyl polyisocyanate mixtures which have a functionality of from 2 to 4. These latter isocyanate compounds are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature, e.g. in US-A-2 683 730; 2 950 263; 3 012 008; 3 344 162 and 3 362 979.

Usually, methylene-bridged polyphenyl polyisocyanate mixtures contain 20 to 100 weight % of methylene diphenyldiisocyanate isomers, with any remainder being polymethylene polyphenyl diisocyanates having higher functionalities and higher molecular weights. Typical of these are polyphenyl polyisocyanate mixtures containing 20 to 100 weight % of methylene diphenyldiisocyanate isomers, of which 20 to 95 weight % thereof is the 4,4'-isomer with the remainder being polymethylene polyphenyl polyisocyanates of higher molecular weight and functionality, having an average

functionality of from 2.1 to 3.5. These isocyanate mixtures are known, commercially available materials and can be prepared by the process described in US-A-3 362 979.

By far the most preferred aromatic polyisocyanate is methylene bis (4-phenylisocyanate) or MDI, e.g. in the form of pure MDI, quasi-prepolymers of MDI, modified pure MDI, etc. Materials of this type may be used to prepare suitable RIM elastomers. Since pure MDI is a solid and, thus, often inconvenient to use, liquid products based on MDI are often used and are included in the scope of the terms MDI or methylene bis(4-phenylisocyanate) used herein. US-A-3 394 164 discloses an example of a liquid MDI product. More generally uretonimine-modified pure MDI is included also. This product is made by heating pure distilled MDI in the presence of a catalyst. The liquid product is a mixture of pure MDI and modified MDI:

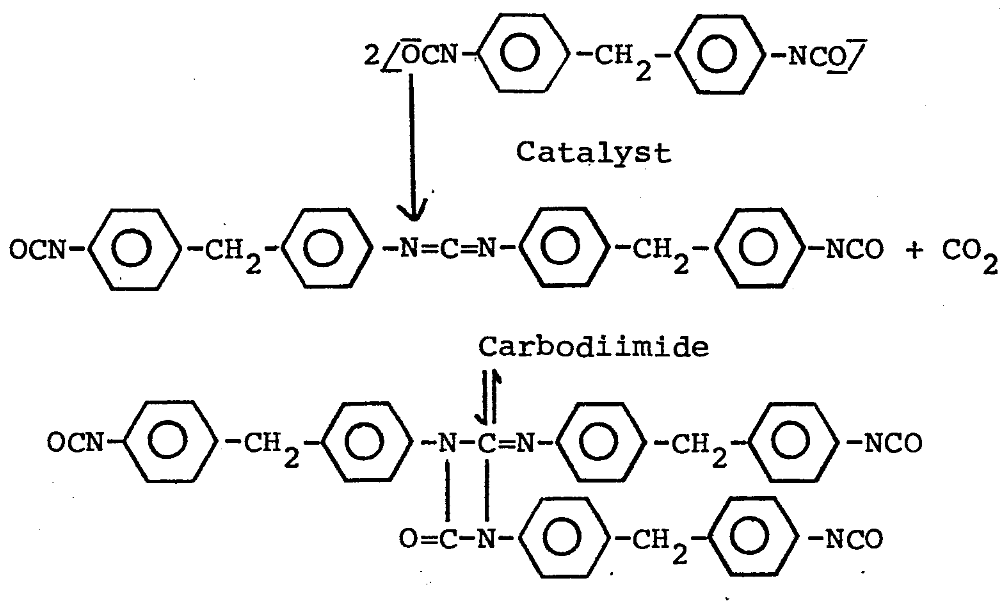


Uretonimine

Examples of commercial materials of this type are Upjohn's ISONATE 125M (pure MDI) and ISONATE 143L ("liquid" MDI), (ISONATE is a Registered Trade Mark). Preferably the amount of isocyanates used is the stoichiometric amount, based on all the ingredients in the formulation, or an amount greater than the stoichiometric amount.

Of course, the term "polyisocyanate" also includes quasi-prepolymers of polyisocyanates with active hydrogen containing materials.

If needed, the following catalysts are useful. Catalysts such as tertiary amines, or an organic tin compound, or other polyurethane catalysts are used. The organic tin compound may suitably be a stannous or stannic compound, such as a stannous salt of a carboxylic acid, a trialkyltin oxide, a dialkyltin dihalide, a dialkyltin oxide, etc., wherein the organic groups of the organic portion of the tin compound are hydrocarbon groups containing from 1 to 8 carbon atoms. For example, dibutyltin dilaurate, dibutyltin diacetate, diethyltin diacetate, dihexyltin diacetate, di-2-ethylhexyltin oxide, dioctyltin dioxide, stannous octoate, stannous oleate, etc., or a mixture thereof, may be used.

Tertiary amine catalysts include trialkylamines (e.g. trimethylamine or triethylamine), heterocyclic amines, such as N-alkylmorpholines (e.g. N-methylmorpholine, N-ethylmorpholine or 1,4-dimethylpiperazine), aliphatic polyamines such as N,N,N'N'-tetramethyl-1,3-butanediamine, or triethylenediamine, in which the aliphatic chain or chains may be interrupted by hetero atoms, e.g. dimethyldiaminodiethylether.

Other conventional formulation ingredients may be employed as desired, for example, foam stabilizers, also known as silicone oils or emulsifiers. The foam stabilizers may be an organic silane or siloxane. For example, compounds may be used having the formula

$$RSi[O-(R_2SiO)_n-(oxyalkylene)_mR]_3$$

wherein R is an alkyl group containing from 1 to 4 carbon atoms; n is 4 to 8; m is 20 to 40; and the oxyalkylene groups are derived from propylene oxide or ethylene oxide, see for example, US-A-3 194 773.

Epoxysilane coupling agents are useful in the present invention. Examples of these materials are monomers of the

formula $R'-SiX_3$, where R' is the epoxide group and the groups X are hydrolyzable groups which are converted into silanol groups when hydrolyzed. A typical example is:

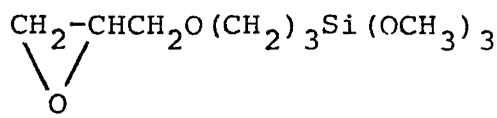

Other similar materials known to those skilled in the art are included in the scope of this invention.

Reinforcing or filler materials useful in the practice of this invention are, for example, materials such as fibreglass, milled glass, flaked glass, mica or Wollastonite. Especially useful is flaked glass. Untreated materials such as those above are preferred for this invention. Of course, reinforcing or filler materials which have been treated with various sizing agents such as epoxy, amine or isocyanate, for example, can also be used so long as the epoxy silane coupling agent is also added separately.

Mould release agents useful for the method of this invention are internal mould release agents. The preferred mould release agent is Dow-Corning Q2-7119. This mould release agent is a dimethyl siloxane with organic acid groups manufactured by Dow-Corning Corporation.

Post curing of the elastomers of the invention is optional. Post curing will improve some properties such as heat sag. Employment of post curing, however, depends on the desired properties of the end product.

EXAMPLE 1

In this example, the following formulation was run in an Accuratio VR-100 machine and plaques of the composite RIM material were made:

B-Component

| | |
|---|---|
| JEFFAMINE T-5000 | 62.33 pbw |
| Diethyltoluenediamine (DETDA) | 27.5 pbw |
| Dow-Corning Z6040 Epoxy Silane coupling agent | 1.0 pbw |
| OCF 0.4 mm flakeglass (unsized)* | 43.1 pbw |

A-Component

| | |
|---|---|
| Upjohn Code 205 Isocyanate (a 2:1 by wt. quasi-prepolymer of Isonate 143L and Thanol SF-5505) | 81.6 pbw |

*Not pretreated with epoxy silane coupling agent. THANOL is a Registered Trade Mark.

Plaques of this material had properties as are listed in Table 1. When exposed to 205°C for one hour, test coupons of these plaques had no surface blistering.

EXAMPLE 2

In this example the same formulation as in Example 1 was run in an Accuratio VR-100 RIM machine, except that the 1.0 pbw of Dow-Corning Z6040 epoxy silane coupling agent was mixed into the A-component rather than the B-component. This worked relatively well, but it did not work as well as putting the epoxy silane coupling agent into the B-component as in Example 1. Properties are listed in Table 1.

COMPARISON EXAMPLE A

In this example the same formulation as Example 1 was run in the Accuratio VR-100 RIM machine, except that instead of 1.0 pbw of Dow-Corning Z6040 epoxy silane coupling agent being blended into the B-component, as was done in Example 1, 1.0 pbw of Dow-Corning Z6020 amino silane coupling agent was blended into the B-component. Surprisingly, this amino silane coupling agent did not produce a composite material which could withstand 205°C for one hour

without blistering. Properties are listed in Table 1.

COMPARISON EXAMPLE B

The same formulation as in Example 1 was run in the Accuratio VR-100 RIM machine, except that no silane coupling agent was added to either the A or B components. This composite could not withstand 205°C for one hour without blistering. In fact, gross blisters and surface distortions were evident in this material when it was exposed to a temperature of 205°C.

TABLE 1

| Material Properties | Example 1[1] | Example 2[1] | Comparison Example A[1] | Comparison Example B[1] |
|---|---|---|---|---|
| Tensile strength, MPa | 22.06 | 22.55 | 20.48 | 17.92 |
| Elongation, % | 48 | 38 | 54 | 48 |
| Flexural modulus, MPa | | | | |
| measured at RT | 1510 | 1007 | 1407 | 1158 |
| 70°C | 972 | 921 | 834 | 848 |
| -29°C | 2089 | 2137 | 1979 | 2179 |
| 155°C | 848 | 848 | 779 | 855 |
| Heat sag, mm | | | | |
| measured at RT | 0.6 | 0.8 | 0.5 | 0.5 |
| 155°C | 6.3 | 4.6 | 5.0 | 5.8 |
| 205°C | 41 | 43 | 52 | 40.6 |

[1]Isocyanate index = 1.05; P/C one hour at 121°C; 20% by weight flakeglass (0.4 mm).

On inspection of Table 1, several conclusions can be drawn:

1. The presence of silane coupling agents in the formulation enhances the tensile strength of the composite, Examples 1, 2, and A versus Example B.
2. When properly used, the presence of silane coupling agents enhances the flexural modulus of the material.
3. Epoxy silane coupling agents are superior to amino silane coupling agents when used in the practice of this invention, namely, when the sizing agent is added directly to the liquid RIM components as compared to being directly coated onto the glass (pretreated). Examples 1 and 2 can withstand 205°C for one hour without blisters. Example 1 showed absolute no surface distortion and so is preferred.

## GLOSSARY OF TERMS AND MATERIALS

| | | |
|---|---|---|
| ISONATE 143L | - | Carbodiimide modified liquid MDI; a product of the Upjohn Co. |
| JEFFAMINE T-5000 | - | Polypropylene oxide triamine of about 5,000 molecular weight; a product of Texaco Chemical Co. |
| DETDA | - | Diethyltoluene diamine; a product of Ethyl Corp. |
| THANOL SF-5505 | - | A 5500 molecular weight polyether triol containing approximately 80% primary hydroxyl groups. |
| THANATE L-55-O | - | Quasi-prepolymer - A quasi-prepolymer formed by reacting equal weights of ISONATE 143L and THANOL SF-5505; a product of Texaco Chemical Co. |
| DOW-CORNING Z6040 | - | 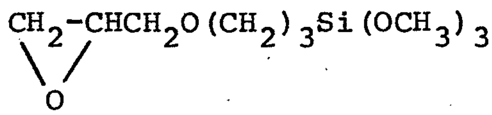 |

CLAIMS:

1. A reaction injection molded elastomer made by reacting an aromatic polyisocyanate in a closed mold with a polyether polyol having an equivalent weight of at least 500, a chain extender and a filler, characterized in that an epoxy silane coupling agent is employed as well as an untreated filler material.

2. An elastomer according to Claim 1, characterized in that the polyether polyol is an amine terminated polyether having an average molecular weight of at least 1,500 and more than 50% of its active hydrogen in the form of amine hydrogen.

3. An elastomer according to Claim 1 or 2 characterized in that the filler material is glass based.

4. An elastomer according to any preceding Claim, characterized in that the filler is glass fibre, milled glass, flaked glass, mica or Wollastonite.

5. An elastomer according to any preceding Claim, characterized in that the chain extender is diethyltoluene diamine.

6. An elastomer according to any preceding Claim, characterized in that the polyisocyanate is a quasi-prepolymer.

7. An elastomer according to any of Claims 2 to 6, characterized in that the amine terminated polyether has a molecular weight of at least 2,500 and a functionality of from 2 to 3.

8. An elastomer according to Claim 7, characterized in that the amine terminated polyether has a molecular weight of at least 5,000.

9. An elastomer according to any preceding Claim, characterized in that the epoxysilane coupling agent has the formula

$$R'-SiX_3$$

wherein R' is an epoxidic group and X is a hydrolyzable group.

10. An elastomer according to any preceding Claim characterized in that the filler is pretreated with an epoxy, amine or isocyanate sizing agent.

0175447

European Patent Office

# EUROPEAN SEARCH REPORT

Application number

EP 85304715.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | EP - A1 - 0 086 271 (SCHERING AKTIENGESELLSCHAFT) * Claims; page 6, lines 5-22; page 10, lines 4-13 * | 1,2,9 | C 08 L 75/04<br>C 08 G 18/66<br>C 08 K 7/14<br>C 08 K 9/04<br>C 08 J 5/08 |
| X | DE - A - 2 107 360 (HONEYWELL INC.) * Claims; page 4, lines 10-28; page 6, lines 14-29; page 10, lines 18-27 * | 1,3,4,6,9 | |
| D,Y | US - A - 4 444 910 (RICE et al.) * Claims; column 4, lines 1-27 * | 1-8 | |
| Y | DE - A1 - 2 913 958 (DAINIPPON INK AND CHEMICALS, INC.) * Claims * | 1,3,4,9,10 | TECHNICAL FIELDS SEARCHED (Int. Cl.4) |
| D,P X | EP - A1 - 0 128 636 (TEXACO DEVELOPMENT CORPORATION) * Claims; page 4, line 36 - page 5, line 2; page 7, line 5; page 9, lines 5-8,25 * | 1-10 | C 08 L 75/00<br>C 08 G 18/00<br>C 08 K<br>C 08 J |

The present search report has been drawn up for all claims

| Place of search | Date of completion of the search | Examiner |
|---|---|---|
| VIENNA | 17-12-1985 | WEIGERSTORFER |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82